# EUROPÄISCHE PATENTSCHRIFT

(11) **EP 2 468 530 B1**
(45) Veröffentlichungstag und Bekanntmachung des Hinweises auf die Patenterteilung: **26.02.2014**
(21) Anmeldenummer: 10196102.7
(22) Anmeldetag: 21.12.2010
(51) Int. Cl.: B60C 9/18, C08K 3/04, C08K 3/06, C08K 5/13, C08K 5/3445, C08K 5/3492, C08K 5/405

(54) **Fahrzeugluftreifen**
Pneumatic tyres for a vehicle
Pneus de véhicule

(43) Veröffentlichungstag der Anmeldung: 27.06.2012
(73) Patentinhaber: Continental Reifen Deutschland GmbH, 30165 Hannover (DE)
(72) Erfinder: Krüger, Jörn, 30926, Seelze (DE)
(74) Vertreter: Finger, Karsten

(56) Entgegenhaltungen:
- EP-A1- 0 964 028
- EP-A1- 1 475 408
- EP-A1- 1 533 338

## Beschreibung

Die Erfindung betrifft einen Fahrzeugluftreifen, insbesondere für Nutzfahrzeuge, mit einer luftundurchlässigen Innenschicht, einer durch Festigkeitsträger verstärkten, zumindest einlagig ausgeführten Karkasse, Wulstbereichen mit Wulstkernen, Seitenwänden, einem mehrlagigen Gürtel mit gummierten, metallischen Festigkeitsträgern und einem Laufstreifen mit Profilrillen.

Fahrzeugluftreifen in Radialbauweise besitzen üblicherweise zur Stabilisierung einen mehrlagigen Gürtel, der gummierte metallische Festigkeitsträger enthält. Bei den gummierten metallischen Festigkeitsträgern handelt es sich in der Regel um vermessingte Stahlcorde. Für die Einbettung dieser Stahlcorde werden spezielle Gummierungsmischungen eingesetzt, mit Hilfe derer eine gute Haftung zwischen einbettender Kautschukmischung (Gummierungsmischung) und Stahlcord erzielt werden soll, um auf diese Weise die Haltbarkeit des Gummi-Stahlcord-Verbundes zu gewährleisten.

Die vermessingten Stahlcorde innerhalb des Reifens sind anfällig für elektrochemische Korrosion. Diese kann insbesondere dann auftreten, wenn eine anfängliche Beschädigung des Stahlcordes und seiner umgebenden Gummierung z. B. durch das Eindringen von Steinen in die Reifenlauffläche aufgetreten ist, und der Stahlcord danach einer fortdauernden Einwirkung von korrodierend wirkenden Substanzen wie Regenwasser, Luftsauerstoff oder Salzwasser ausgesetzt ist. Diese Einwirkung der Substanzen führt zu einer fortschreitenden Ausbreitung der korrodierten Bereiche, was in einem Verlust der Gummi-Stahlcord-Haftung in den korrodierten Bereichen resultiert und damit letztendlich zu einem Ausfall des Reifens führen kann. Bei Nutzfahrzeugreifen ist außerdem zu berücksichtigen, dass bei einem zu hohen Korrosionsgrad der radial äußeren Gürtellage der Reifen nicht mehr für die Runderneuerung geeignet ist.

Zur Vermeidung der Korrosion von Metallen ist es hinlänglich bekannt, Korrosionsinhibitoren einzusetzen, deren Anwesenheit auf der Metalloberfläche die Korrosion hemmt. Als Korrosionsinhibitoren werden in so genannten Sparbeizen beispielsweise organische Verbindungen wie Dialkylthioharnstoffe, Sulfoxide, 2-Mercaptobenzothiazol, Trithione, 2-Propin-1-ol, 2-Butin-1,4-diol, Hexamethylentetramin oder Thioamide eingesetzt, die das Grundmetall weitgehend vor einem Angriff schützen, in dem sie schneller Redox-Reaktionen eingehen als das Metall.

Bei Fahrzeugluftreifen hat es sich aber herausgestellt, dass auf dem vermessingten Stahlcord anhaftende Korrosionsinhibitoren die Haftung zwischen Gummi und Stahlcord so stark verringern, dass der Einsatz von organischen Korrosionsinhibitoren direkt auf dem Stahlcord oder in der einbettenden Gummierungsmischung nicht möglich ist. Die Korrosionsinhibitoren verhindern oder behindern die während der Vulkanisation stattfindende Reaktion zwischen der vermessingten Stahlcordoberfläche und dem Haftsystem in der Gummierungsmischung.

Der Effekt einer ungenügenden Schichthaftung durch die Anwesenheit von Korrosionsinhibitoren wird auch für die galvanische Metallbeschichtung in der DE 41 19 102 A1 beschrieben, weshalb die Inhibitoren vor der galvanischen Beschichtung elektrochemisch desorbiert werden.

Der Erfindung liegt die Aufgabe zu Grunde, bei einem Fahrzeugluftreifen der eingangs genannten Art die Haltbarkeit und Runderneuerungsfähigkeit zu verbessern.

Gelöst wird die Aufgabe erfindungsgemäß dadurch, dass der Fahrzeugluftreifen radial außerhalb des mehrlagigen Gürtels mit gummierten, metallischen Festigkeitsträgern zumindest eine vulkanisierte Kautschukmischung aufweist, die nicht in direktem Kontakt mit den metallischen Festigkeitsträgern steht und die zumindest einen organischen Korrosionsinhibitor enthält.

Der Grundgedanke der Erfindung ist darin zu sehen, dass zum einen die Haftung zwischen metallischem Festigkeitsträger und Gummierungsmischung nicht beeinträchtigt wird, zum anderen aber nach der Herstellung der Reifens und dem Abschluss der Haftungsreaktion die gummierten metallischen Festigkeitsträger des Gürtels vor Korrosion geschützt werden. Letzteres geschieht durch die Diffusion des organischen Korrosionsinhibitors aus einer Kautschukmischung, die nicht die Gummierungsmischung ist, zum metallischen Festigkeitsträger hin, wobei die Haftungsreaktion zwischen Haftsystem und metallischem Festigkeitsträger nicht mehr beeinflusst wird, weil sie bereits abgeschlossen ist. Der Gürtel des Fahrzeugluftreifens wird dadurch gegen Korrosion geschützt, auch wenn es zu einer Verletzung durch eindringende Steine kommen sollte, und die Runderneuerungsfähigkeit wird nicht durch Korrosion am Gürtel beeinträchtigt.

Als organische Korrosionsinhibitoren kommen alle im Bereich des Korrosionsschutzes einsetzbaren Substanzen in Frage, wobei diese einzeln aber auch als Gemische eingesetzt werden können. Vorzugsweise ist der Korrosionsinhibitor bzw. sind die Korrosionsinhibitoren jedoch ausgewählt aus der Gruppe, bestehend aus Mercaptobenzothiazol, Alkylaminotriazolen, Benzotriazolen, Alkylphenyltriazolen, Amino-alkyl-benzimidazolen und Phenylthioharnstoffen. Mit diesen Substanzen wird durch hohe Diffusionsgeschwindigkeiten in den vulkanisierten Kautschukmischungen des Reifens ein schneller und hoher Schutz der metallischen Festigkeitsträger der Gürtellagen erzielt.

Im Stand der Technik werden derartige Substanzen aufgrund ihrer die Vulkanisation beschleunigenden Wirkung u.a. im Laufstreifen von Fahrzeugreifen eingesetzt.

In der EP 0964028 A1 dienen Triazole wie z. B. Benzotriazol dazu, Kautschukmischungen für unterschiedliche Reifenbauteile, u. a. auch Laufstreifen oder Kissenstreifen, bereitzustellen, die beim Reifen ein verbessertes Fahrbahnverhalten und Handling sowie einen niedrigen Rollwiderstand bei niedrigen Abrieb bewirken.

Die EP 1533338 A1 offenbart Kautschukmischungen für Kissenstreifen, die Mercaptobenzothiazole enthalten. Diese Substanzen dienen als Vulkanisationsbeschleuniger und sollen die Produktivität ohne negativen Einfluss auf die Reifeneigenschaften verbessern.

In der EP 1475408 A1 werden Kautschukmischungen für Laufstreifen von Fahrzeugreifen beschrieben, die Benzimidazole enthalten. Letztere sollen beim Reifen zu besserem Griff auch bei hoher Geschwindigkeit ohne Beeinträchtigung der Produktivität führen.

Gemäß einer bevorzugten Weiterbildung der Erfindung enthält die Kautschukmischung 0,1 bis 10 phr, vorzugsweise 0,5 bis 2 phr, des Korrosionsinhibitors. In diesen Mengebereichen wird ein optimaler Korrosionsschutz erreicht, ohne dass andere gewünschte Vulkanisateigenschaften, wie Härte, Elastizitätsmodul, Zugfestigkeit oder Reißdehnung, negativ beeinflusst werden.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Da insbesondere die radial äußere Gürtellage des mehrlagigen Gürtels der Gefahr der Beschädigung beispielsweise durch eindringende Steine ausgesetzt ist, weist der Fahrzeugluftreifen erfindungsgemäß radial außerhalb des Gürtels die Kautschukmischung mit dem Korrosionsinhibitor auf, so dass der Korrosionsinhibitor schnell zu der gefährdeten äußeren Gürtellage diffundieren kann. Dabei ist es möglich, dass die Kautschukmischung mit dem organischen Korrosionsinhibitor Teil des Laufstreifens ist. Es kann sich dabei z. B. um die Kautschukmischung des gesamten Laufstreifens handeln. Weist der Laufstreifen einen Cap-und-Base-Aufbau auf, kann es sich sowohl um die Cap- als auch die Basemischung handeln. Es können auch beide Mischungen den Korrosioninhibitor enthalten. Ist im Reifen ein so genannter Undertread vorgesehen, kann auch dieser Korrosioninhibitoren enthalten.

Alternativ dazu kann aber auch vorgesehen sein, dass die Kautschukmischung mit dem zumindest einen organischen Korrosionsinhibitor als zusätzliche Lage zwischen Laufstreifen und radial äußerer Gürtellage angeordnet ist. Dies bietet den Vorteil, dass diese Lage den speziellen Erfordernissen eines optimalen Schutzes der Gürtellagen hinsichtlich ihrer chemischen und physikalischen Eigenschaften angepasst werden kann, ohne dass die gewünschten Eigenschaften der anderen Mischungen des Reifens beeinflusst werden.

Für einen besonders guten Schutz der äußeren Gürtellage weist die zusätzliche Lage eine Schichtdicke von 0,4 bis 3,0 mm auf. Die in den Lagen dieser Schichtdicke vorliegende Menge an Kautschukmischung mit Korrosioninhibitor gewährleistet einen sicheren Korrosionsschutz.

Da der Gürtel eines Fahrzeugluftreifen hohen thermischen Belastungen durch Walk-und Fliehkräfte ausgesetzt ist, hat es sich als vorteilhaft erwiesen, dass die zusätzlichen Lage eine Wärmeleitfähigkeit von mehr als 0,28 W/(m*K) aufweist. Dadurch kann am Gürtel entstehende Wärme, die zu einer Depolymerisation der umgebenden Kautschukmischungen führen kann, effektiv in äußere Bereiche abgeführt werden.

Die Herstellung der erfindungsgemäßen Fahrzeugluftreifen erfolgt nach dem Fachmann bekannten Verfahren. Wird eine zusätzliche Lage mit Korrosionsinhibitor verwendet, kann diese gesondert extrudiert und aufgelegt oder mit einem Mehrfachextruder gemeinsam mit dem Laufstreifen extrudiert und aufgelegt werden.

Die Erfindung soll nun anhand der Figur und der Tabelle 1 näher erläutert werden.

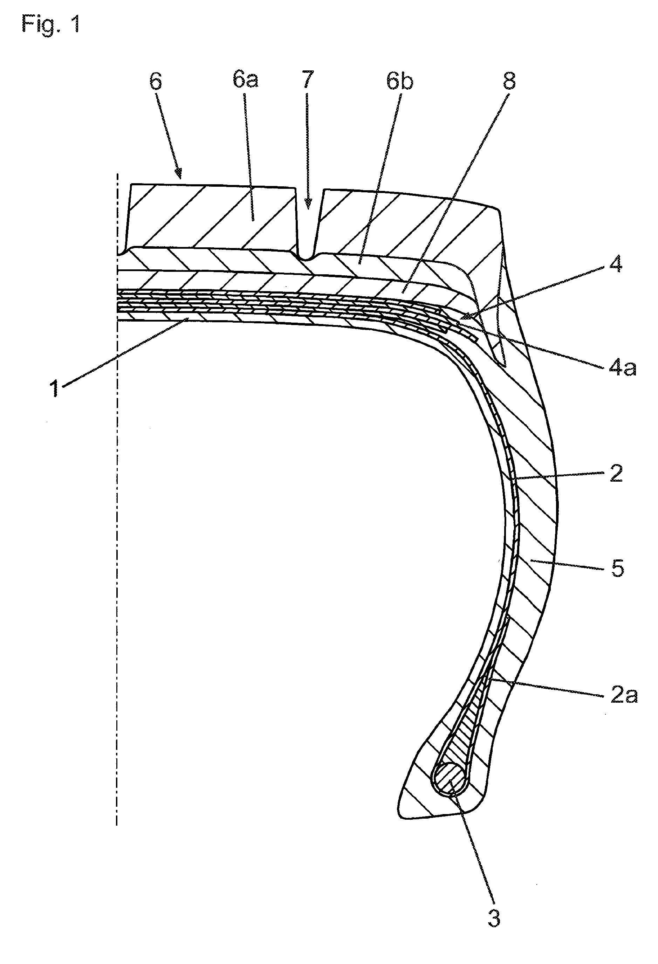

Die einzige Zeichnungsfigur, Fig. 1, zeigt einen Querschnitt durch einen Fahrzeugluftreifen mit einer Ausführungsform der Erfindung.

Der in Fig. 1 schematisch dargestellte Fahrzeugluftreifen weist einen für Nutzfahrzeugreifen typischen Aufbau aus einer luftundurchlässigen Innenschicht 1, einer mit Festigkeitsträgern verstärkten Karkasseinlage 2, einem Gürtel 4 aus einer Anzahl von Lagen bestehend aus in Gummi eingebetteten metallischen Festigkeitsträgern, Wulstbereichen mit Wulstkernen 3, zwei Seitenwänden 5 und einem Laufstreifen 6 auf. Die Karkasseinlage 2 verläuft über den Zenitbereich und die Seitenwände 5 bis in die Wulstbereiche, ist hier von axial innen nach axial außen um Wulstkerne 3 herumgeschlagen und endet Hochschläge 2a bildend in den Seitenwänden 5. Bei einem Nutzfahrzeugreifen besteht der Gürtel 4 meist aus vier Gürtellagen 4a. Der radial außerhalb des Gürtels 4 angeordnete Laufstreifen 6 weist zwei Schichten auf, nämlich eine Laufstreifencap (Laufstreifenoberteil) 6a, welche die radial äußerste Schicht bildet, und eine Laufstreifenbase (Laufstreifenunterteil) 6b. Das Laufstreifencap 6a ist profiliert, wobei Profilrillen 7 vorgesehen sind, die bis auf die maximal vorgesehene Profiltiefe reichen. Die Mischung für die Laufstreifencap 6a ist bevorzugt eine hinsichtlich Abrieb optimierte Mischung. Die Laufstreifenbase 6b ist aus einer Mischung gefertigt, welche hinsichtlich Hysterese-Verluste optimiert ist. Radial außerhalb des Gürtels 4 und unterhalb der Laufstreifenbase 6b ist eine zusätzliche Lage 8 aus einer Kautschukmischung angeordnet, die einen organischen Korrosionsinhibitor aufweist. Die Schichtdicke dieser zusätzlichen Lage 8 beträgt ca. 1 mm. Sie steht nicht in direktem Kontakt mit den metallischen Festigkeitsträgern. Letztere sind noch von der Gummierungsmischung eingebettet. Eine mögliche Mischungszusammensetzung der Lage 8 ist in der folgenden Tabelle 1 wiedergegeben. Der Korrosioninhibitor aus der Lage 8 wandert nach der Herstellung des Reifens in die Gummierungsschichten der metallischen Festigkeitsträger des Gürtels und schützt diese vor Korrosion.

In der Tabelle 1 sind Beispielmischungen für die Kautschukmischung der Lage 8 mit Korrosionsinhibitor und eine Vergleichsmischung ohne Korrosionsinhibitor mit ihren charakteristischen Eigenschaften angegeben.

Die Mischungsherstellung erfolgte unter üblichen Bedingungen unter Herstellung einer Grundmischung und anschließend der Fertigmischung in einem Labortangentialmischer. Es wurden die Mooney-Viskositäten ML (1+4) bei 100 °C mit Hilfe eines rotorlosen Vulkameters (MDR = Moving Disc Rheometer) gemäß DIN 53 523 ermittelt. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN 53 505
- Rückprallelastizität bei Raumtemperatur gemäß DIN 53 512
- Zugfestigkeit bei Raumtemperatur gemäß DIN 53 504
- Reißdehnung bei Raumtemperatur gemäß DIN 53 504
- Spannungswerte (Modul) bei 50, 100, 200 und 300 % Dehnung bei Raumtemperatur gemäß DIN 53 504
- Stahlcordhaftung gemäß ASTM 2229/D1871 vor Alterung bei Raumtemperatur, Einbettlänge 12,5 mm, Auszugsgeschwindigkeit 125 mm/min, Messung der Herausziehkraft und der Bedeckung mit Gummi (0 % = keine Bedeckung, 100 % = vollständige Bedeckung), verwendeter Stahlcord: vermessingt, 3x0,20 + 6x0,35, wobei der Stahlcord mit einer üblichen Gummierungsmischung versehen wurde und zwischen zwei Platten aus unterschiedlichen Kautschukmischungen einvulkanisiert wurde. Die eine Platte bestand aus einer Kautschukmischung mit Korrosionsinhibitor, die andere Platte war die Vergleichsmischung ohne Korrosionsinhibitor.

**Tabelle 1**

| **Bestandteile** | **Einheit** | **Vergleichsmischung** | **Mischung 1 für Lage 8** | **Mischung 2 für Lage 8** |
|---|---|---|---|---|
| Naturkautschuk | phr | 100 | 100 | 100 |
| Ruß N326 | phr | 51 | 51 | 51 |
| Kieselsäure | phr | 10 | 10 | 10 |
| Weichmacheröl | phr | 7 | 7 | 7 |
| Korrosionsinhibitor^{a} | phr | - | 0,25 | 2,0 |
| Alterungsschutzmittel | phr | 1,5 | 1,5 | 1,5 |
| Resorcin | phr | 1,25 | 1,25 | 1,25 |
| Hexamethoxymethylmelamin | phr | 1,4 | 1,4 | 1,4 |
| Zinkstearat | phr | 1 | 1 | 1 |
| Zinkoxid | phr | 6 | 6 | 6 |
| Beschleuniger | phr | 1,2 | 1,2 | 1,2 |
| Schwefel | phr | 5,5 | 5,5 | 5,5 |
| **Eigenschaften** | | | | |
| ML (1+4) bei 100 °C | Mooney-Einh. | 41,2 | 38,3 | 42,1 |
| Härte bei RT | ShoreA | 72 | 72 | 72 |
| Rückprallelast. bei RT | % | 40 | 40 | 37 |
| Zugfestigkeit bei RT | MPa | 22 | 22 | 22 |
| Reißdehnung bei RT | % | 429 | 440 | 489 |
| Modul 50 % | MPa | 1,8 | 1,8 | 1,8 |
| Modul 100 % | MPa | 3,4 | 3,4 | 3,1 |
| Modul 200 % | MPa | 9,0 | 8,8 | 7,6 |
| Modul 300 % | MPa | 16,0 | 15,7 | 13,5 |
| Herausziehkraft | N | 790 | 836 | 823 |
| Bedeckung | % | 96 | 97 | 96 |

| | | | | |
|---|---|---|---|---|
| ^{a} 5-Methylbenzotriazol | | | | |

Aus der Tabelle wird ersichtlich, dass die Vulkanisateigenschaften durch die Anwesenheit des Korrosionsinhibitors nicht nachteilig beeinflusst werden. Werden die Mischungen 1 und 2 radial außerhalb des Gürtels angeordnet, kann der Korrosionsinhibitor nach der Vulkanisation des Reifens u. a. in Richtung Stahlcord diffundieren und schützt so den Stahlcord vor Korrosion.

## Patentansprüche

1. Verwendung einer Substanz, ausgewählt aus der Gruppe, bestehend aus Mercaptobenzothiazol, Alkylaminotriazolen, Benzotriazolen, Alkylphenyltriazolen, Amino-alkyl-benzimidazolen und Phenylthioharnstoffen als Korrosionsinhibitor in Fahrzeugluftreifen, insbesondere für Nutzfahrzeuge, mit einer luftundurchlässigen Innenschicht (1), einer durch Festigkeitsträger verstärkten, zumindest einlagig ausgeführten Karkasse (2), Wulstbereichen mit Wulstkernen (3), Seitenwänden (5), einem mehrlagigen Gürtel (4) mit gummierten, metallischen Festigkeitsträgern und einem Laufstreifen (6) mit Profilrillen (7), wobei der Fahrzeugluftreifen außerhalb des mehrlagigen Gürtels (4) mit gummierten, metallischen Festigkeitsträgern zumindest eine vulkanisierte Kautschukmischung aufweist, die nicht in direktem Kontakt mit den metallischen Festigkeitsträgern steht und die diese Substanz enthält.

2. Verwendung nach Anspruch 1, **dadurch gekennzeichnet, dass** die Kautschukmischung 0,1 bis 10 phr der Substanz enthält.

3. Verwendung nach Anspruch 2, **dadurch gekennzeichnet, dass** die Kautschukmischung 0,5 bis 2 phr der Substanz enthält.

4. Verwendung nach zumindest einem der Ansprüche 1 bis 3, **dadurch gekennzeichnet, dass** die Kautschukmischung mit der Substanz Teil des Laufstreifens ist.

5. Verwendung nach zumindest einem der Ansprüche 1 bis 3, **dadurch gekennzeichnet, dass** die Kautschukmischung mit der Substanz als zusätzliche Lage (8) zwischen Laufstreifen und radial äußerer Gürtellage angeordnet ist.

6. Verwendung nach Anspruch 5, **dadurch gekennzeichnet, dass** die zusätzliche Lage (8) eine Schichtdicke von 0,4 bis 3,0 mm aufweist.

7. Verwendung nach Anspruch 5 oder 6, **dadurch gekennzeichnet, dass** die zusätzlichen Lage (8) eine Wärmeleitfähigkeit von mehr als 0,28 W/(m*K) aufweist.

## Claims

1. Use of a substance, selected from the group consisting of mercaptobenzothiazole, alkylaminotriazoles, benzotriazoles, alkylphenyltriazoles, amino-alkyl-benzimidazoles and phenylthioureas as a corrosion inhibitor in pneumatic vehicle tyres, in particular for commercial vehicles, with an air-impermeable inner layer (1), a casing (2), strengthened by reinforcing elements and comprising at least one ply, bead regions with bead cores (3), sidewalls (5), a multiply breaker belt (4) with rubberized, metallic reinforcing elements, and a tread (6) with profile grooves (7), the pneumatic vehicle tyre having outside the multiply breaker belt (4) with rubberized, metallic reinforcing elements at least one vulcanized rubber mixture that is not in direct contact with the metallic reinforcing elements and contains this substance.

2. Use according to Claim 1, **characterized in that** the rubber mixture contains 0.1 to 10 phr of the substance.

3. Use according to Claim 2, **characterized in that** the rubber mixture contains 0.5 to 2 phr of the substance.

4. Use according to at least one of Claims 1 to 3, **characterized in that** the rubber mixture with the substance is part of the tread.

5. Use according to at least one of Claims 1 to 3, **characterized in that** the rubber mixture with the substance is arranged as an additional ply (8) between the tread and the radially outer belt ply.

6. Use according to Claim 5, **characterized in that** the additional ply (8) has a layer thickness of 0.4 to 3.0 mm.

7. Use according to Claim 5 or 6, **characterized in that** the additional ply (8) has a thermal conductivity of more than 0.28 W/(m*K).

## Revendications

1. Utilisation d'une substance sélectionnée dans l'ensemble constitué du mercaptobenzothiazole, des alkylaminotriazoles, des benzotriazoles, des alkylphényltriazoles, des aminoalkylbenzimidazoles et des phénylthiourées comme inhibiteurs de corrosion dans des bandages pneumatiques pour roue de véhicules, en particulier de véhicules utilitaires, qui présentent
une couche intérieure (1) imperméable à l'air, une carcasse (2) renforcée par des renforts et présentant au moins une couche, des parties de bourrelet dotées d'une âme (3) de bourrelet, des parties latérales (5), une ceinture multicouche (4) dotée de renforts métalliques caoutchoutés et une bande de roulement (6) dotée de nervures profilées (7),
le bandage pneumatique pour roue de véhicule présentant à l'extérieur de la ceinture multicouche (4) dotée de renforts métalliques caoutchoutés au moins un mélange de caoutchouc vulcanisé qui n'est pas en contact direct avec les renforts métalliques et qui contient cette substance.

2. Utilisation selon la revendication 1, **caractérisée en ce que** le mélange de caoutchouc contient de 0,1 à 10 phr de la substance.

3. Utilisation selon la revendication 2, **caractérisée en ce que** le mélange de caoutchouc contient de 0,5 à 2 phr de la substance.

4. Utilisation selon au moins l'une des revendications 1 à 3, **caractérisée en ce que** le mélange de caoutchouc doté de la substance fait partie de la bande de roulement.

5. Utilisation selon au moins l'une des revendications 1 à 3, **caractérisée en ce que** le mélange de caoutchouc est disposé en tant que couche supplémentaire (8) entre la bande de roulement et la couche radialement extérieure de ceinture.

6. Utilisation selon la revendication 5, **caractérisée en ce que** la couche supplémentaire (8) présente une épaisseur de 0,4 à 3,0 mm.

7. Utilisation selon les revendications 5 ou 6, **caractérisée en ce que** la couche supplémentaire (8) présente une conductivité thermique supérieure à 0,28 W/(m.K).
